# FASCICULE DE BREVET EUROPEEN

(11) **EP 0 679 350 B1**
(45) Date de publication et mention de la délivrance du brevet: **07.08.2002**
(21) Numéro de dépôt: 95200984.3
(22) Date de dépôt: 19.04.1995
(51) Int. Cl.: A45D 20/30, A45D 20/12, G05D 23/27

(54) **Sèche-cheveux à flux d'air controlé**
Haartrockner mit geregeltem Luftstrom
Hair dryer with controlled air flow

(30) Priorité: 27.04.1994 FR 9405092
(43) Date de publication de la demande: 02.11.1995
(73) Titulaire: Koninklijke Philips Electronics N.V., 5621 BA Eindhoven (NL)
(72) Inventeur: Polaert, Rémy, Société Civile S.P.I.D., F-75008 Paris (FR); Hazan, Jean-Pierre, Société Civile S.P.I.D., F-75008 Paris (FR); Nagel, Jean-Louis, Société Civile S.P.I.D., F-75008 Paris (FR)
(74) Mandataire: Landousy, Christian

(56) Documents cités:
- EP-A- 0 021 666
- EP-A- 0 468 240
- WO-A-86/01696
- CH-A- 603 106
- DE-A- 2 827 514
- DE-A- 4 208 680
- US-A- 4 206 872
- PATENT ABSTRACTS OF JAPAN vol. 18 no. 257 (C-1200) ,17 Mai 1994 & JP-A-06 038828 (MATSUSHITA ELECTRIC WORKS) 15 Février 1994,
- PATENT ABSTRACTS OF JAPAN vol. 15 no. 345 (C-0864) ,3 Septembre 1991 & JP-A-03 136626 (KOITO IND LTD) 11 Juin 1991,
- PATENT ABSTRACTS OF JAPAN vol. 17 no. 297 (C-1068) ,8 Juin 1993 & JP-A-05 023209 (MATSUSHITA ELECTRIC WORKS) 2 Février 1993,

## Description

L'invention concerne un sèche-cheveux électrique comportant un boîtier avec une arrivée d'air et une sortie d'air entre lesquelles sont placés des moyens pour délivrer un flux d'air chaud qui comprennent des moyens de circulation d'air et des moyens de chauffage de l'air, des moyens de détection pour mesurer des rayonnements émis par des cheveux, des moyens de commande qui agissent sur les moyens de circulation d'air et sur les moyens de chauffage pour régler le flux d'air chaud en fonction des mesures de rayonnement émis.

Le séchage des cheveux consiste à faire évaporer l'eau retenue par les cheveux à l'aide d'un flux d'air chaud. Celui-ci est obtenu à l'aide d'un ventilateur qui délivre le flux d'air, lui-même réchauffé en passant en contact avec des moyens de chauffage. Au début du processus d'évaporation, l'eau retenue par les cheveux forme un écran thermique qui évite de détériorer ou de brûler les cheveux ou le cuir chevelu. Au fur et à mesure que l'eau s'évapore, celle-ci fait de moins en moins écran et il peut apparaître une détérioration des cheveux et/ou une sensation de brûlure pouvant aller jusqu'à la brûlure elle-même.

Pour éviter que les cheveux et/ou le cuir chevelu ne subissent une trop grande élévation de température au cours du processus de séchage, on a pensé à mesurer la température des cheveux.

Parmi les méthodes utilisant des détecteurs sans contact direct avec les cheveux, on connaît celle décrite dans le document GB 2.093.343 A. Cette méthode consiste à mesurer à distance la température des cheveux à l'aide d'un capteur infra-rouge placé à l'extérieur du corps du sèche-cheveux. Une optique permet de viser l'endroit de la chevelure soumise au séchage. Le détecteur infra-rouge agit sur les moyens de chauffage lorsqu'une température prédéterminée est atteinte.

En cours de séchage la température du flux d'air devient ainsi de plus en plus proche de la température ambiante.

La demande de brevet DE-A-42 08 680 décrit un appareil de séchage qui comporte un dispositif de commande qui diminue automatiquement le rendement calorifique de l'appareil et la vitesse du flux d'air chaud au fur et à mesure de l'augmentation du signal de rayonnement calorifique. Dans ce document, les moyens de chauffage et de circulation d'air sont commandés par une même commande.

L'invention a notamment pour but d'améliorer ce dispositif de commande. Ce but est atteint avec un sèche-cheveux tel que décrit dans le paragraphe introductif, et dans lequel lesdits moyens de commande agissent en combinaison sur les moyens de circulation d'air et sur les moyens de chauffage, et comprennent un premier circuit pour contrôler les moyens de circulation d'air selon une première caractéristique qui définit les variations de la vitesse du flux d'air en fonction des mesures de rayonnement émis, et un second circuit pour contrôler les moyens de chauffage selon une seconde caractéristique qui définit les variations de la puissance de chauffage en fonction des mesures de rayonnement émis.

L'invention tient compte du fait qu'en cours de séchage les cheveux qui initialement étaient mouillés, donc lourds et raides, deviennent peu à peu légers et fluides et peuvent ainsi être très facilement emmêlés par le flux d'air ce qui peut contribuer à détériorer les cheveux et constituer un élément d'inconfort.
En utilisant en combinaison deux lois de variations distinctes pour commander d'une part le chauffage, et d'autre part les moyens de circulation d'air, il est possible d'optimiser le confort de l'utilisateur en évitant au mieux les brûlures d'une part et l'emmêlement des cheveux d'autre part.

On module le débit et la température du flux d'air chaud, de sorte que le séchage soit effectué en projetant au début du processus, de l'air chaud mais sans risque de brûlure ni de désagrément tant que les cheveux, grâce à leur humidité, forment un écran thermique, puis au fur et à mesure du séchage, en projetant de l'air de moins en moins chaud, avec un débit de plus en plus faible, ce qui rend le séchage mieux adapté en évitant d'emmêler et de détériorer les cheveux et en accroissant le confort de l'utilisateur. De plus, le bruit de moins en moins élevé fait par les moyens de circulation d'air prévient l'utilisateur de la progression du séchage lui indiquant entre autres la fin du séchage. Ceci est utile lorsque l'opération de séchage est faite par une tierce personne.

Les variations concomittantes du débit et de la température du flux d'air sont également décelables à l'oreille et au niveau de la peau de l'utilisateur ce qui permet de l'avertir de la fin du séchage. Il faut de plus indiquer que cette fin de séchage concerne la zone de la chevelure soumise à l'action du flux d'air et dont la température est mesurée par les moyens de détection. L'utilisateur est donc prévenu qu'il peut déplacer le sèche-cheveux vers une autre zone de la chevelure. Ce moyen sonore pour prévenir l'utilisateur est également utile lorsqu'on sèche une partie de cheveux longs qui n'est pas placée juste devant la peau de l'utilisateur.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent :
Figure 1 : un schéma d'un sèche-cheveux selon l'invention.
Figure 2 : des courbes montrant un exemple des variations automatiques de la température de l'air, de la température des cheveux, de la vitesse de l'air, de la puissance électrique dissipée dans l'élément chauffant au cours d'une séquence de fonctionnement.
Figure 3 : des courbes typiques indiquant les variations de la puissance électrique dissipée dans l'élément chauffant et les variations de la vitesse de l'air délivrée par le ventilateur en fonction de la température des cheveux.
Figure 4 : un schéma des moyens de commande automatique de la température et du débit du flux d'air.

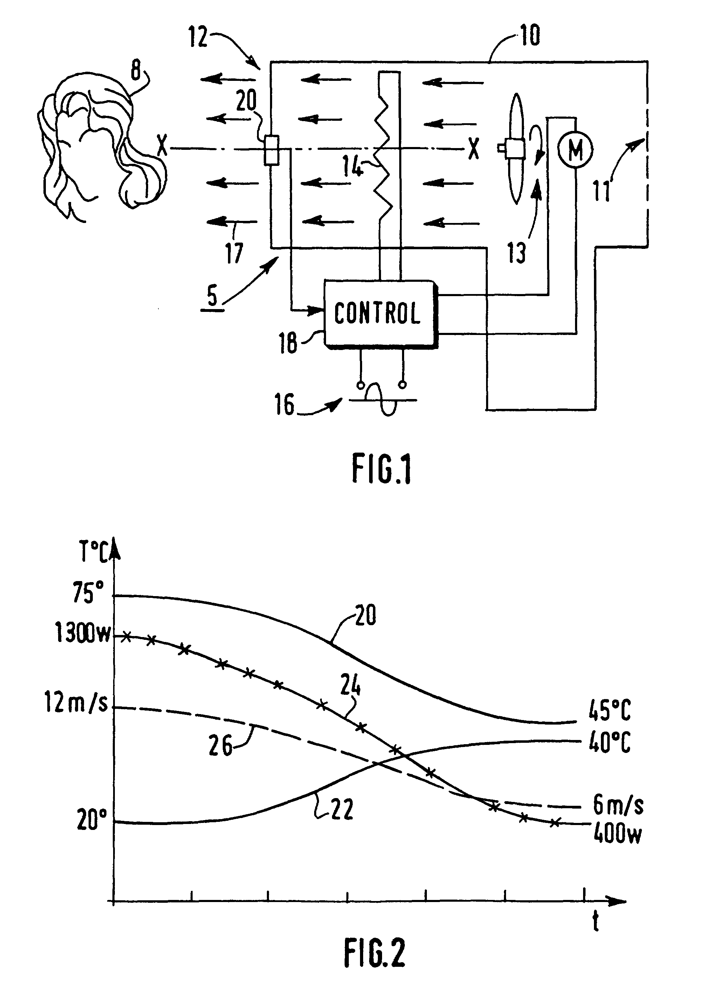

La figure 1 représente un sèche-cheveux 5 comprenant un boîtier 10 et, entre une arrivée d'air 11, une sortie d'air 12, des moyens 13 de circulation d'air suivis de moyens 14 pour chauffer l'air en circulation. Les moyens 13 de circulation d'air sont formés par exemple d'un ventilateur. Les moyens 13 de circulation d'air et les moyens 14 sont connectés à une alimentation en énergie électrique 16 à travers des moyens de commande 18 (CONTROL). L'air peut ainsi être chauffé et propulsé à l'extérieur du sèche-cheveux. Pour utiliser le sèche-cheveux, l'utilisateur dirige le flux d'air chaud 17 qui sort de la sortie d'air 12 vers des cheveux 8.

Selon l'invention, on utilise des moyens 20 pour mesurer le rayonnement de chaleur émis par les cheveux, par exemple un capteur infra-rouge. Le capteur 20 est réuni aux moyens de commande 18 pour commander les moyens 13 de circulation d'air et les moyens de chauffage 14 d'après la température mesurée sur les cheveux. Pour cela les moyens de commande 18 font varier automatiquement en combinaison la température et le débit du flux d'air.

Un exemple illustrant ces variations automatiques est représenté sur la figure 2. Sur cette figure, on considère le cas où le sèche-cheveux reste dirigé en permanence sur une même zone de cheveux.

La courbe 20 représente les variations au cours du temps de la température Ta de l'air à 9 cm environ de l'extrémité 12 de sortie.

La courbe 22 représente les variations au cours du temps de la température Th des cheveux mesurée par le capteur 20.

La courbe 24 représente les variations au cours du temps de la puissance électrique P dissipée dans les moyens de chauffage 14.

La courbe 26 représente les variations au cours du temps de la vitesse S de l'air à 9 cm environ de l'extrémité 12 de sortie.

Considérons le cas d'une opération de séchage qui débute avec des cheveux mouillés ayant une température Th = 20° C et un sèche-cheveux qui possède au démarrage les caractéristiques suivantes : P = 1300 W, S = 12 m/s, Ta = 75° C.

Selon l'invention les moyens 18 de commande vont automatiquement faire varier les réglages du sèche-cheveux pour passer d'un séchage vigoureux au début à un séchage peu à peu plus modéré et finir par un séchage doux en fin de cycle.

On peut désirer par exemple qu'en fin de séchage, la température des cheveux soit au maximum de 40° C pour disposer d'un confort agréable. Pour cela la température de l'air sortant du sèche-cheveux va être réduite progressivement de Ta = 75° C à Ta = 45° C par exemple. Il faut prévoir un léger décalage entre Ta et Th. Les cheveux devenant en cours de séchage de plus en plus fluides, les moyens 18 de commande réduisent également la vitesse du flux d'air par exemple de 12 m/s à 6 m/s pour éviter que les cheveux soient trop dispersés par le flux d'air. La puissance électrique de chauffage est elle aussi réduite par exemple de 1300 W à 400 W. Il est en effet recommandé de réduire cette puissance électrique lorsque le débit d'air diminue pour ne pas risquer d'endommager le sèche-cheveux.

A titre d'exemple, le tableau I fournit des conditions de réglages qui ont été observées pour les conditions de confort et de sécurité prévues par l'invention.

**TABLEAU I**

| | Vitesse de l'air | Puissance de chauffage | Température Ta | Température Th |
|---|---|---|---|---|
| | | | | |
| Séchage vigoureux | 12 m/s | 1300 W | 75° C | 20° C |
| Séchage normal | 10,5 m/s | 1000 W | 70° C | 23° C |
| Séchage modéré | 8,2 m/s | 750 W | 56° C | 35° C |
| Séchage doux | 6 m/s | 400 W | 45° C | 40° C |

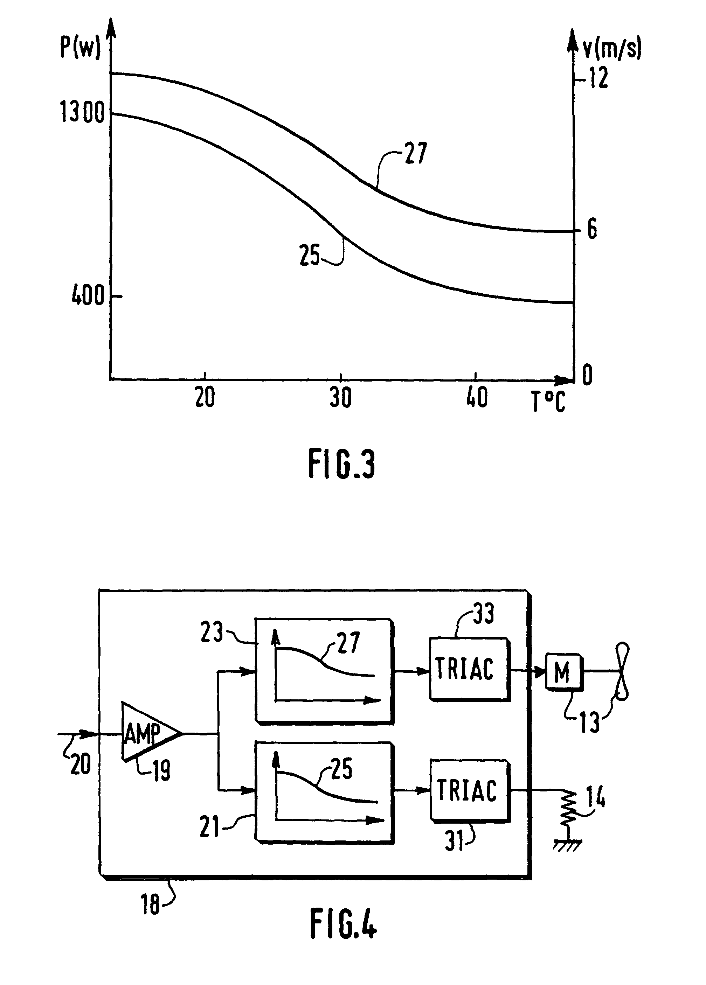

La figure 3 représente, à titre d'exemple, une courbe 25 de variations de la puissance de chauffage et celle 27 de la vitesse du flux d'air qu'il convient d'appliquer, en fonction de la température des cheveux 8 détectée par le capteur 20. Ces courbes concernent la zone de cheveux qui, à un instant donné, est placée sous l'action du séchage et qui est sous le contrôle du capteur 20.

Les moyens de commande 18 sont par exemple ceux représentés sur la figure 4. Ils comprennent un amplificateur de signal 19 suivi de deux circuits analogiques 21 et 23 tels qu'ils commandent par l'intermédiaire de circuits à transistors ou à triacs appropriés 31 et 33, respectivement d'une part, la puissance de chauffage et d'autre part, la vitesse du flux d'air, selon les caractéristiques 25 et 27 indiquées par la figure 3. Ces caractéristiques sont préférentiellement non linéaires comme indiquées sur la figure 3. Elles peuvent avoir une allure différente. Selon un autre mode de réalisation, les circuits analogiques sont remplacés par des circuits de traitement numérique comportant des convertisseurs analogiques-numériques, des tables de correspondance numérique qui engendrent les caractéristiques 25 et 27 et des convertisseurs numériques-analogiques qui commandent les circuits de puissance précités.

Lorsque l'utilisateur déplace le sèche-cheveux vers une zone encore humide et donc encore froide, le capteur 20 de température détecte une température de cheveux plus basse de sorte que les moyens de contrôle 18 réajustent à la fois la puissance de chauffage et le flux d'air d'après les courbes indiquées sur la figure 3.

Il est possible d'utiliser tout capteur apte à mesurer un rayonnement infra-rouge émis par les cheveux. Il peut s'agir du capteur décrit dans le document GB 2.093.343 A ou de tout autre capteur. Préférentiellement on utilise un capteur formé d'une pluralité de cellules élémentaires développant un pouvoir thermoélectrique. Une cellule est formée par un empilement de couches conductrices et/ou semiconductrices telles que la cellule développe une différence de potentiel électrique induite en réponse à un flux de chaleur. Un tel capteur est, par exemple, décrit dans les documents FR 2.471.055 et FR 2.598.803.

## Revendications

1. Sèche-cheveux électrique (5) comportant un boîtier (10) avec une arrivée d'air (11) et une sortie d'air (12) entre lesquelles sont placés des moyens pour délivrer un flux d'air chaud qui comprennent des moyens de circulation d'air (13) et des moyens de chauffage de l'air (14), des moyens de détection (20) pour mesurer des rayonnement émis par des cheveux (8), des moyens de commande (18) qui agissent sur les moyens de circulation d'air et sur les moyens de chauffage pour régler le flux d'air chaud en fonction des mesures de rayonnement émis, **caractérisé en ce que** les moyens de commande agissent en combinaison sur les moyens de circulation d'air et sur les moyens de chauffage, et comprennent un premier circuit (23) pour contrôler les moyens de circulation d'air selon une première caractéristique (27) qui définit les variations de la vitesse du flux d'air en fonction des mesures de rayonnement émis, et un second circuit (21) pour contrôler les moyens de chauffage selon une seconde caractéristique (25) qui définit les variations de la puissance de chauffage en fonction des mesures de rayonnement émis.

2. Sèche-cheveux selon la revendication 1, **caractérisé en ce que** lesdits premier et second circuits sont des circuits analogiques.

3. Sèche-cheveux selon la revendication 1, **caractérisé en ce que** lesdits premier et second circuits comportent des tables de conversion numérique.

## Patentansprüche

1. Elektrischer Haartrockner (5), der aus einem Gehäuse (10) mit einem Lufteinlass (11) und einem Luftauslass (12) besteht, zwischen denen Mittel zum Erzeugen eines warmen Luftstroms angeordnet sind, die Mittel zur Luftzirkulation (13) und Mittel zum Erwärmen der Luft (14), Detektormittel (20) zum Messen der von den Haaren (8) abgegebenen Strahlung und Regelungsmittel (18) umfassen, die auf die Mittel zur Luftzirkulation und die Mittel zum Erwärmen der Luft wirken, um den warmen Luftstrom in Abhängigkeit von den gemessenen Werten der abgegebenen Strahlung zu regeln, **dadurch gekennzeichnet, dass** die Regelungsmittel kombiniert auf die Mittel zur Zirkulation und die Mittel zum Erwärmen der Luft wirken und eine erste Schaltung (23) zum Regeln der Mittel zur Luftzirkulation gemäß einem ersten Merkmal (27), das die Änderungen der Geschwindigkeit des Luftstroms in Abhängigkeit von der gemessenen abgegebenen Strahlung definiert, und eine zweite Schaltung (21) zum Regeln der Mittel zum Erwärmen gemäß einem zweiten Merkmal (25), das die Änderungen der Heizleistung in Abhängigkeit von der gemessenen abgegebenen Strahlung definiert, umfassen.

2. Haartrockner nach Anspruch 1, **dadurch gekennzeichnet, dass** die genannte erste und die genannte zweite Schaltung analoge Schaltungen sind.

3. Haartrockner nach Anspruch 1, **dadurch gekennzeichnet, dass** die genannte erste und die genannte zweite Schaltung digitale Umrechnungstabellen umfassen.

## Claims

1. An electric hair dryer (5) comprising a housing (10) with an air inlet (11) and an air outlet (12) between which are arranged means for delivering a flow of hot air, comprising air circulation means (13) and air heating means (14), detection means (20) for measuring a radiation emitted by the hair (8), control means (18) which act on the air circulation means and the heating means for regulating the flow of hot air as a function of measurements of emitted radiation, **characterized in that** said control means act jointly on the air circulation means and on the heating means and comprise a first circuit (23) for controlling the air circulation means in accordance with a first characteristic (27) which defines the variations in speed of the air flow as a function of the measurements of the emitted radiation, and a second circuit (21) for controlling the heating means in accordance with a second characteristic (25) which defines the variations of the heating power as a function of the measurements of the emitted radiation.

2. A hair dryer as claimed in Claim 1, **characterized in that** said first and second circuits are analog circuits.

3. A hair dryer as claimed in Claim 1, **characterized in that** said first and second circuits comprise digital conversion tables.
